# EUROPÄISCHE PATENTSCHRIFT

(11) **EP 1 062 720 B1**
(45) Veröffentlichungstag und Bekanntmachung des Hinweises auf die Patenterteilung: **19.09.2001**
(21) Anmeldenummer: 99907605.2
(22) Anmeldetag: 06.03.1999
(51) Int. Cl.: H02K 3/50

(54) **SCHALTUNGSANORDNUNG ZUM VERSCHALTEN VON STATORWICKLUNGEN EINES BÜRSTENLOSEN, ELEKTRONISCH KOMMUTIERTEN MOTORS**
CIRCUIT CONFIGURATION FOR CONNECTING UP THE STATOR WINDINGS OF A BRUSHLESS ELECTRONICALLY COMMUTATED MOTOR
CIRCUIT POUR LA CONNEXION D'ENROULEMENTS DE STATOR D'UN MOTEUR SANS BALAIS A COMMUTATION ELECTRONIQUE

(30) Priorität: 19.03.1998 DE 19812019
(43) Veröffentlichungstag der Anmeldung: 27.12.2000
(73) Patentinhaber: TEMIC Automotive Electric Motors GmbH, 26133 Oldenburg (DE)
(72) Erfinder: FINDEISEN, Antje, 26125 Oldenburg (DE); KRAMER, Thomas, 26133 Oldenburg (DE); VON KNORRE, Dietrich, 26209 Hatten (DE)
(74) Vertreter: Kolb, Georg
(86) Internationale Anmeldenummer: EP9901458
(87) Internationale Veröffentlichungsnummer: WO9948188

(56) Entgegenhaltungen:
- EP-A- 0 477 054
- EP-A- 0 777 312
- WO-A-97/26700
- FR-A- 2 651 933
- US-A- 5 548 458

## Beschreibung

Die Erfindung betrifft eine Schaltungsanordnung zum Verschalten von Statorwicklungen eines bürstenlosen, elektronisch kommutierten Motors der im Oberbegriff des Patentanspruchs 1 angegebenen Art.

Auf einer Reihe von Anwendungsgebieten treten elektronisch gesteuerte Elektromotoren immer stärker in den Vordergrund. Hierbei handelt es sich um Elektromotoren, bei denen das erforderliche, periodische Schalten von Spulen nicht mehr durch einen Kommutator, sondern durch elektronische Schalteinrichtungen vorgenommen wird. Zu den elektronischen Schalteinrichtungen können, z. B. geeignete Sensoren gehören, die feststellen, wann der Stator und der Läufer für die gerade zu schaltenden Spulen sich in einer schaltungsgünstigen bzw. schaltungserfordernden Relativstellung befinden. Es versteht sich, daß die elektronischen Schalteinrichtungen auch dafür sorgen müssen, daß die Stromzuführungen zu dem bzw. den jeweiligen Spulen in der gerade passenden Stromrichtung erfolgen.

Es sind auch bereits elektronisch gesteuerte Elektromotoren bekannt, bei denen entweder für die Statorpole oder für die Läuferpole Dauermagnete eingesetzt worden sind. Dauermagnete bieten hierbei eine Reihe von Vorteilen, wie Fehlen von Stromverbrauch, geringe Abmessungen und einfache Herstellung und Montage. Derartige Elektromotoren werden heutzutage auf vielen technischen Gebieten eingesetzt, so z. B. auch im Kraftfahrzeugwesen als Antriebsmotor für Kühlerlüfter oder Servovorrichtungen. Insbesondere in längs zur Fahrtrichtung eingebauten Verbrennungsmotoren in Kraftfahrzeugen ist der Einbauraum für einen elektrisch betriebenen Ventilator zur Kühlung des Kühlers sehr begrenzt. Konventionelle Dauermagnetmotoren lassen sich wegen ihrer großen axialen Baulänge nicht einsetzen.

Durch die europäische Patentschrift 0 645 542 ist ein Kraftfahrzeuglüfter mit einem EC-Motor bekannt, bei dem die Wicklungen des Ankers und sonstige elektronische Komponenten mit einer gedruckten Schaltung auf einem Träger verbunden sind. Hierbei ist das Verbinden der freien Enden der Wicklungen mit der gedruckten Schaltung noch recht kompliziert und kostenaufwendig.

Durch die US 5,548,458 ist eine Schaltungsanordnung zum Verschalten von Statorwicklungen eines bürstenlosen, elektronisch kommutierten Elektromotors bekannt, welcher zum Antrieb von Plattenspeichern vorgesehen ist. Hierbei sind Strombahnen auf einer dem Statorblechpaket abgekehrten Seite einer ringscheibenförmigen Trägerplatte konzentrisch angeordnet.

Die Enden bzw. die Anfänge der Wicklungsdrähte werden mittels Lötstellen auf der Trägerplatte befestigt, wobei die Lötstellen über Verbindungsleiter mit den Strombahnen verbunden sind.

Weiterhin ist durch die EP 0 777 312 A2 ein Stator für Elektromotoren offenbart, der aus einem Statorblechpaket, Statorwicklungen und einer an einer Stirnseite des Statorblechpaketes angeordneten Verschaltungsanordnung für die Statorwicklungen besteht. Insbesondere weist die Verschaltungsanordnung ein Isolierteil mit nutenförmigen Kammern für die Aufnahme von elektrischen, gegeneinander isolierten Verbindungsleitern für die Verschaltung der Wicklungsdrahtenden der Statorwicklungen auf. Hierbei ist aber keine Sternschaltung mit einem Sternpunkt vorgesehen.

Der Erfindung liegt die Aufgabe zugrunde, eine Schaltungsanordnung zum Verschalten von Statorwicklungen eines bürstenlosen, elektronisch kommutierten Elektromotors zu schaffen, die bei einer flachen Bauweise ein einfaches Verschalten der Statorwicklungen ermöglicht. Diese Aufgabe wird durch die im Patentanspruch 1 gekennzeichneten Merkmale gelöst.
Die erfindungsgemäß, aus einer ringförmigen Trägerplatte und gestanzten Stromschiene bestehende Schaltplatte gewährleistet neben einer kostengünstigen Montage ein einfaches Verbinden der Schaltplatte mit den freien Enden der Statorwicklungen.

Weitere vorteilhafte Ausgestaltungen des Erfindungsgegenstandes sind den weiteren Unteransprüchen zu entnehmen.
Die Erfindung wird anhand eines Ausführungsbeispieles im folgenden näher beschrieben. Es zeigen:
- Figur 1: einen Schnitt durch einen EC-Motor,
- Figur 2: eine Draufsicht auf die Schaltplatte,
- Figur 3: einen Schnitt durch die Schaltplatte,
gemäß der Schnittlinie A-A nach Figur 2,
- Figur 4: einen Schnitt durch die Schaltplatte
gemäß der Schnittlinie B-B nach Figur 2,
- Figur 5: einen Schnitt durch die Schaltplatte
gemäß der Schnittlinie C-C nach Figur 2,
- Figur 6: eine Draufsicht auf den Stator,
- Figur 7: die Stromschienen 1 und 3 nach dem Stanzvorgang,
- Figur 8: die Stromschienen 2 und 4 nach dem Stanzvorgang und
- Figur 9: ein Wickelschema für einen 12nutigen Stator mit vier Stromschienen.

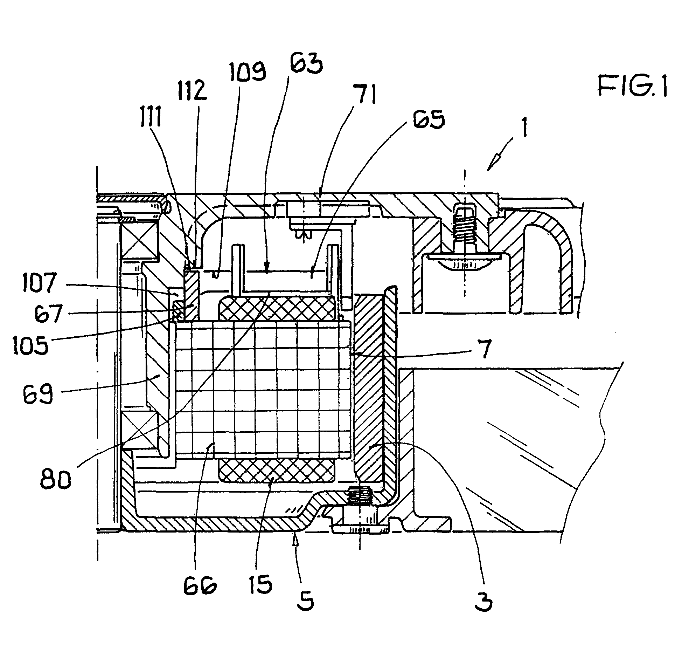

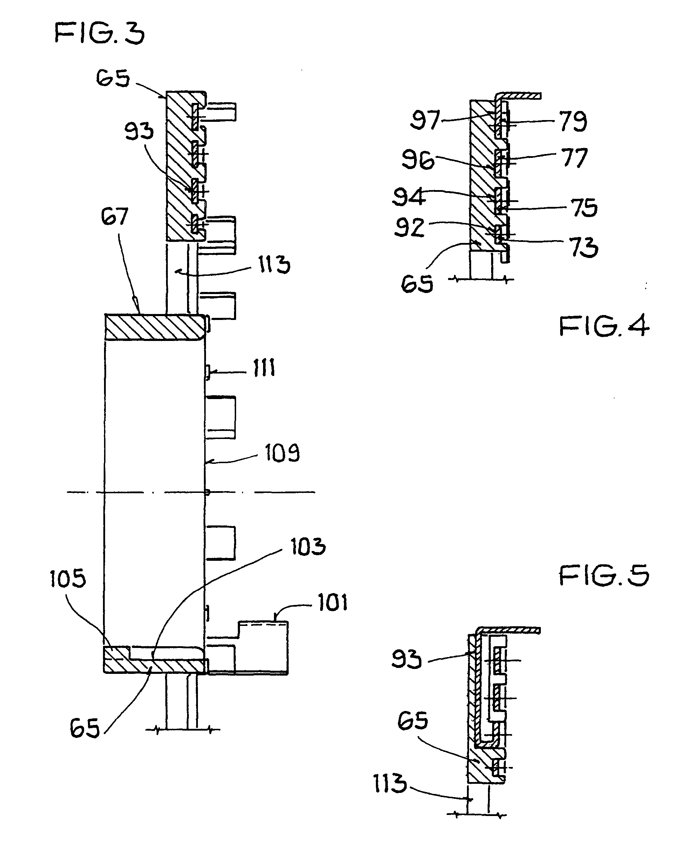

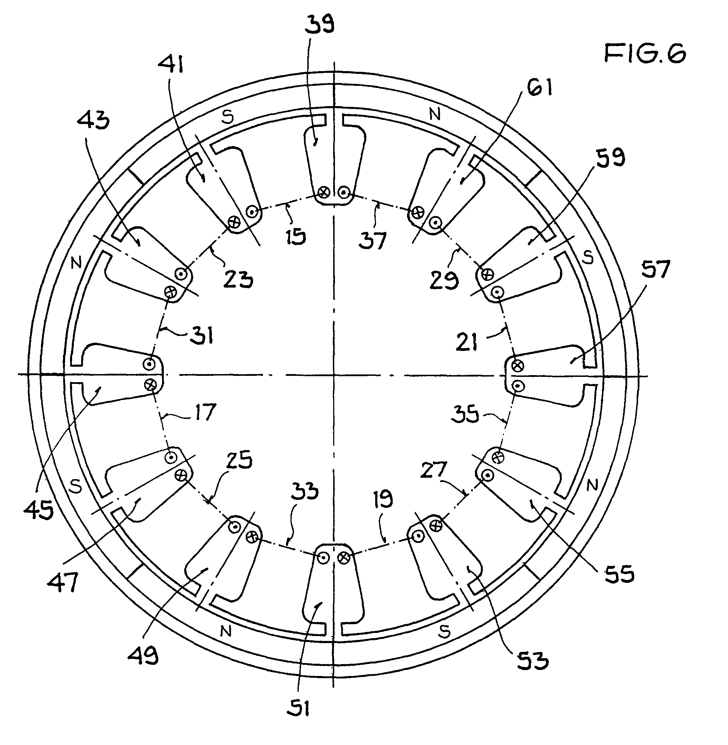

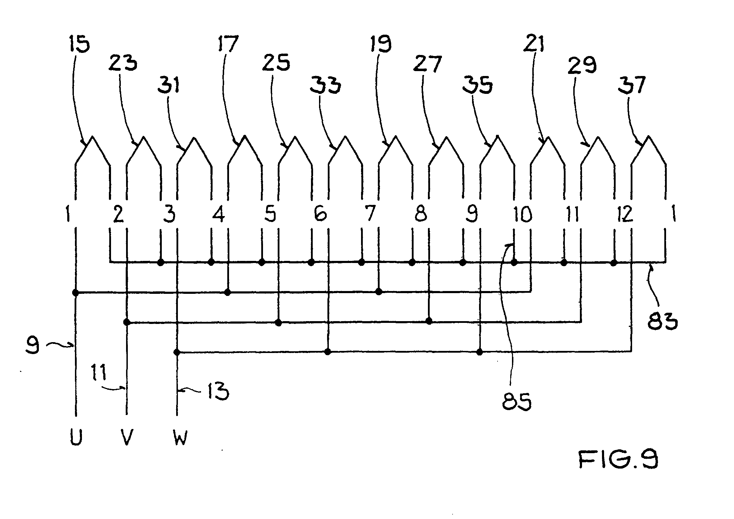

Die Figur 1 zeigt einen Teilschnitt durch einen bürstenlosen, elektronisch kommutierten Motor, auch EC-Motor 1 genannt, der als Antriebsmotor insbesondere für einen Kfz-Lüfterantrieb mit einem Permanentmagnete 3 aufweisenden Außenrotor 5 dient. Hierbei ist in dem Außenrotor 5 ein Stator 7 mit z. B. drei um 120° versetzten Wicklungssträngen 9, 11, 13. Jeder Wicklungsstrang 9, 11, 12 hat gemäß Figur 9 vier parallel geschaltete Wicklungsspulen 15, 17, 19, 21, 23, 25, 27, 29, 31, 33, 35, 37, welche gemäß Figur 6 in 12 Wicklungsnuten 39, 41, 43, 45, 47, 49, 51, 53, 55, 57, 59, 61 des Stators 7 gewickelt sind.

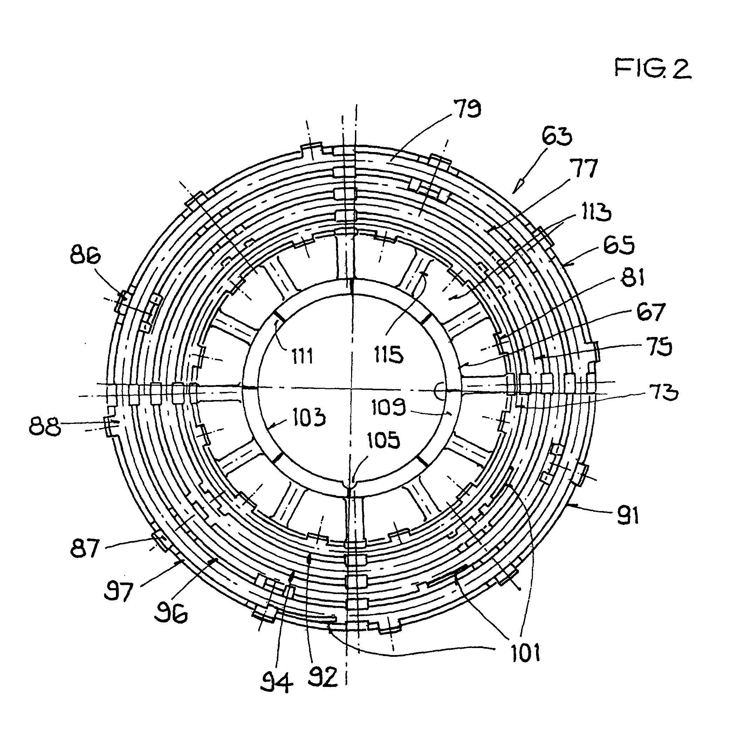

Zur Parallelschaltung der Wicklungsspulen 15 - 37 der einzelnen Wicklungsstränge 9, 11, 13 dient gemäß den Figuren 1 und 2 eine Schaltplatte 63, die aus einer Trägerplatte 65 aus Isoliermaterial besteht, welche mit einer Nabe 67 zusammen mit dem Statorblechpaket 66 auf einem Lagertragrohr 69 an dem Motorflansch 71 fest gelagert ist. Die Strombahnen der Schaltplatte 63 sind konzentrisch zu der Nabe 67 auf der Trägerplatte 65 befestigte Stromschienen 73, 75, 77, 79, welche auf der den Statorwicklungen 15 - 37 abgekehrten Seite 80 der Trägerplatte 65 angeordnet sind. Diese Stromschienen 73, 75, 77, 79 bestehen aus Stanzteilen, von denen die zu der Nabe 67 der Trägerplatte 65 am nächsten angeordnete, erste Stromschiene 73 abgewinkelte Laschen 81 zum Verbinden des Sternpunktes 83 mit den Enden 85 der Statorwicklungen 15 - 37 aller Wicklungsstränge 9, 11, 13 aufweist. Die drei weiteren Stromschienen 75, 77, 79 sind um die erste Stromschiene 73 konzentrisch auf der Trägerplatte 65 befestigt, wobei die Laschen 86, 87, 88 an den Stromschienen 75 - 79 zum Verbinden mit den Wicklungsanfängen 89 mit gleichem Abstand von der Nabe 67 an der Peripherie 91 der Trägerplatte 65 angeordnet sind. Um Kreuzungspunkte zwischen den Schienen 75 - 79 und den Laschen 86, 87, 88 zu vermeiden, sind die Laschen 86 der zweiten Stromschiene 75 mittels vertieft angeordneter Führungen 93 in der Trägerplatte 65 unter die dritte Stromschiene 77 und unter die vierte Stromschiene 79 und die Laschen 87 der dritten Stromschiene 77 mittels vertieft angeordneter Führungen 95 unter die vierte Stromschiene 79 hindurchführbar angeordnet. Hierbei sind die Stromschienen 73, 75, 77, 79 in einer ersten Ebene in Ringnuten 97 der Trägerplatte 65 eingelassen befestigt, während die vertieft angeordneten Führungen 93, 95 für die Laschen 86, 87 der zweiten (75) und der dritten Stromschiene 77 in einer zweiten Ebene in der der Trägerplatte 65 eingearbeitet. sind.

Die Stromschienen 73, 75, 77, 79 sind in den Ringnuten 92, 94, 96 97 einpreßbar angeordnet. Im Rahmen der Erfindung kann die Trägerplatte 65 Rastnasen zum Verrasten der Stromschienen 73, 75, 77, 79 in den Ringnuten 92, 94, 96, 97 aufweisen. Auch können die Stromschienen 73, 75, 77, 79 durch Warmverstemmungen in den Ringnuten 97 der Trägerplatte 65 arretiert werden. Das Verbinden der Enden 85 der Statorwicklungen 9 - 13 erfolgt dadurch, daß die Trägerplatte 65 zwischen ihrer ringförmigen Nabe 67 und der ersten Stromschiene 73 Durchstecköffnungen 113 aufweist. Hierbei sind die kammerartigen Durchstecköffnungen 113 durch rippenartige Verbindungsstege 115 voneinander getrennt.

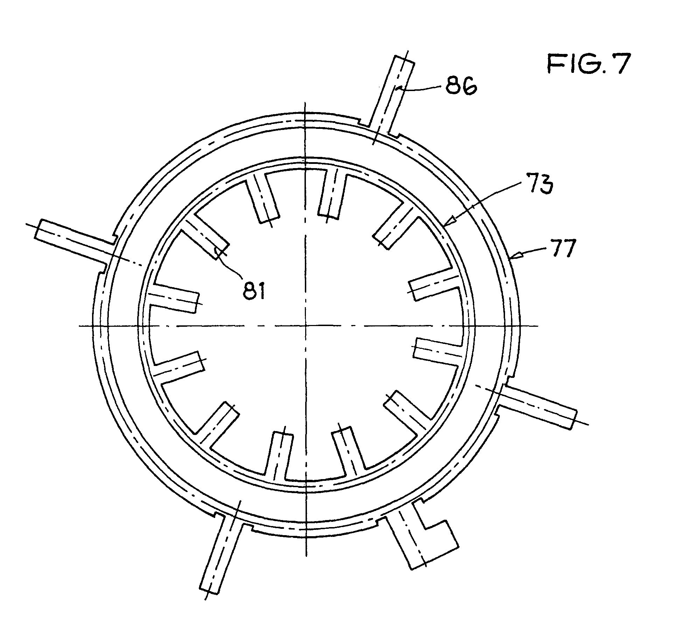

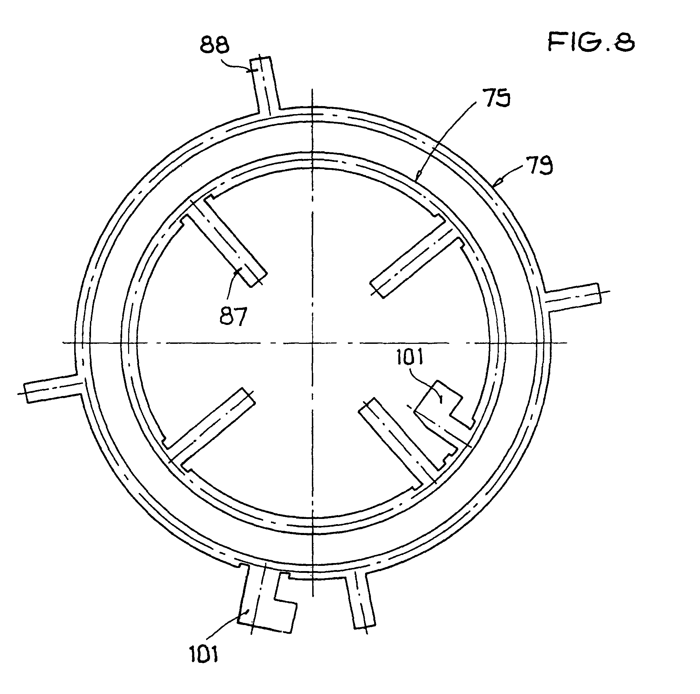

Ein möglichst weniger Verschnitt bei der Herstellung der aus Stanzmaterial bestehenden Stromschienen 73, 75, 77, 79 wird dadurch gewährleistet, daß die erste (73) und die dritte Stromschiene 77 gemäß Figur 7 in einem ersten Stanzwerkzeug und die zweite (75) und die vierte Stromschiene 79 gemäß Figur 8 in einem zweiten Stanzwerkzeug in je einem Stanzvorgang herstellbar sind, wobei die zweite, dritte und vierte Stromschiene 75, 77, 79 mit je einer Verbindungslasche 101 für Anschlußlitze versehen werden.

Um eine genaue Positionierung der Schaltplatte 63 zu der Wicklungsspule 15 - 37 des Stators 7 zu erzielen, ist die Nabe 67 der Trägerplatte 65 auf ihrer Innenumfangsfläche 103 mit einer Zentriernase 105 versehen, welche in Rastrausnehmungen 107 des Lagertragrohres 69 an dem Motorflansch 71 einrastbar ist.

Vorteilhaft wird ein Toleranzausgleich in axialer Richtung dadurch erzielt, daß die dem Motorflansch 71 zugekehrte Stirnfläche 109 der Nabe 67 der Trägerplatte 65 vorstehende Ausgleichsnasen 111 aufweist, welche mit einer ringförmigen Anschlagfläche 112 an dem Lagertragrohr 69 zur Anlage bringbar sind. Im montierten Zustand werden die Ausgleichsnasen 111 mehr oder weniger stark flachgedrückt.

## Patentansprüche

1. Schaltungsanordnung zum Verschalten von Statorwicklungen eines bürstenlosen, elektronisch kommutierten Antriebsmotors für einen KFZ-Lüfterantrieb mit einem drei um 120° Grad versetzt angeordnete Wicklungsstränge (9, 11, 13) aufweisenden Stator (7) und mit einer flanschseitig dem Stator (7) zugekehrt angeordneten, tragenden Schaltplatte (63), die aus einer ringscheibenförmigen Trägerplatte (65) besteht, mit einer Nabe (67) auf einem Lagerrohr (69) an dem Motorflansch (71) fest gelagert ist und auf der den Statorwicklungen (15 - 37) abgekehrten Seite (80) der Trägerplatte (65) und konzentrisch zu der Nabe (67) auf der Trägerplatte (65) befestigte Stromschienen (73, 75, 77, 79) aufweist, von denen je eine mit den Anfängen (89) der Statorwicklungen (15 - 37) je eines Wicklungsstranges (9, 11, 13) uad eine mit den Enden (85) der Statorwicklungen (15 - 37) aller Wicklungsstränge (9, 11, 13) verbunden sind, **dadurch gekennzeichnet, daß** die zu der Nabe (67) der Trägerplatte (65) am nächsten angeordnete erste Stromschiene (73) abgewinkelte Laschen (81) aufweist, mit welchen die Enden (85) der Statorwicklungen (15 - 17) aller Wicklungsstränge (9, 11, 13) durch in der Trägerplatte (65) zwischen ihrer ringförmigen Nabe (67) und der ersten Stromschiene (73) angeordnete Durchstecköffnungen (113) verbindbar sind, daß drei weitere Stromschienen (75, 77, 79) um die erste Stromschiene (73) konzentrisch auf der Trägerplatte (65) befestigt sind und daß die an der zweiten, der dritten und der vierten Stromschiene (75, 77, 79) angeordneten Laschen (86, 87, 88) zum Verbinden mit den Wicklungsanfängen (89) mit gleichem Abstand von der Nabe (67) an der Peripherie (91) der Trägerplatte (65) angeordnet sind, wobei die Laschen (86) der zweiten Stromschiene (75) mittels vertieft angeordneter Führungen (93) in der Trägerplatte (65) unter die dritte (77) und vierte Stromschiene (79) und die Laschen (86) der dritten Stromschiene (77) mittels vertieft angeordneter Führungen (95) unter die vierte Stromschiene (79) hindurchführbar angeordnet sind.

2. Schaltungsanordnung nach Anspruch 1, **dadurch gekennzeichnet, daß** die Stromschienen (73, 75, 79) in einer Ebene in Ringnuten (97) der Trägerplatte (65) eingelassen befestigt sind und daß die vertieft angeordneten Führungen (93, 95) für die Laschen (86, 87) der zweiten und dritten Stromschiene (75, 77) in einer zweiten Ebene in der Trägerplatte (65) eingearbeitet sind.

3. Schaltungsanordnung nach Anspruch 2, **dadurch gekennzeichnet, daß** die Stromschienen (73, 75, 77, 79) in die Ringnuten (97) einpreßbar angeordnet sind.

4. Schaltungsanordnung nach Anspruch 3, **dadurch gekennzeichnet, daß** die Trägerplatte (65) Rastnasen zum Verrasten der Stromschienen (73, 75, 77, 79) in den Ringnuten (97) aufweist.

5. Schaltungsanordnung nach Anspruch 3, **dadurch gekennzeichnet, daß** die Stomschiene (73,75, 77, 79) durch Warmverstemmungen in den Ringnuten (97) der Trägerplatte (65) arretierbar sind.

6. Schaltungsanordnung nach einem der vorhergehenden Ansprüche, **dadurch gekennzeichnet, daß** die erste und die dritte Stromschiene (73, 77) in einem ersten Stanzwerkzeug und die zweite und die vierte Stromschiene (75, 79) in einem zweiten Stanzwerk in je einem Stanzvorgang herstellbar sind, wobei die zweite, dritte und vierte Stromschiene (75, 77, 79) gleichzeitig mit je einer Lasche (101) für Anschlußschlitze versehen werden.

7. Schaltungsanordnung nach einem der vorhergehenden Ansprüche, **dadurch gekennzeichnet, daß** die Nabe (67) der Trägerplatte (65) auf ihrer Innenumfangsfläche (103) eine Zentriernase (105) aufweist, welche zum winkelgenauen Positionieren der Tragplatte (65) zu den Wicklungsspulen (15 - 37) in Rastausnehmungen (107) des Lagertragrohres (69) einrastbar ist.

8. Schaltungsanordnung nach einem der vorhergehenden Ansprüche, **dadurch gekennzeichnet, daß** die dem Motorflansch (71) zugekehrte Stirnfläche (109) der Nabe (67) aufweist, welche mit einer ringförmigen Anschlagfläche (113) zum Toleranzausgleich in Axialrichtung an dem Lagertragrohr (69) zur Anlage bringbar sind.

## Claims

1. A circuit arrangement for connecting up the stator windings of a brushless electronically commutated motor for a motor vehicle fan drive incorporating a stator (7) comprising three winding strands (9, 11, 13) that are mutually displaced by 120° and incorporating a supporting circuit board (63) at the flange side which faces the stator (7) and consists of an annular disc-shaped support plate (65), said circuit board (63) being rigidly mounted on a mounting tube (69) on the motor flange (71) by a hub (67) and comprising current rails (73, 75, 77, 79) that are attached to the support plate (65) concentrically of the hub (67) on the side (80) of the support plate (65) remote from the stator windings (15 - 37), whereby each of said current rails is connected to the starts (89) of the stator windings (15 - 37) of a respective winding strand (9, 11, 13) and one is connected to the ends (85) of the stator windings (15 - 37) of all of the winding strands (9, 11, 13), **characterised in that** the first current rail (73) arranged closest to the hub (67) of the support plate (65) comprises angled tabs (81) to which the ends (85) of the stator windings (15 - 37) of all of the winding strands (9, 11, 13) are connectible through through-openings (113) arranged in the support plate (65) between its annular hub (67) and the first current rail (73), in that three further current rails (75, 77, 79) are attached to the support plate (69) concentrically of the first current rail (73) and in that the tabs (86, 87, 88) arranged on the second, the third and the fourth current rails (75, 77, 79) are arranged at the periphery (91) of the support plate (65) at equal distances from the hub (67) for the purposes of connection to the starts (89) of the windings, whereby the tabs (86) of the second current rail (75) are arranged such that they are adapted to be fed below the third (77) and fourth current rails (79) by means of guideways (93) sunk into the support plate (65), and the tabs (86) of the third current rail (77) are arranged such that they are adapted to be fed under the fourth current rail (79) by means of sunken guideways (95).

2. A circuit arrangement in accordance with Claim 1, **characterised in that** the current rails (73, 75, 79) are fixed in annular grooves (97) let into the support plate (65) in one plane, and in that the sunken guideways (93, 95) for the tabs (86, 87) of the second and third current rails (75, 77) are worked into the support plate (65) in a second plane.

3. A circuit arrangement in accordance with Claim 2, **characterised in that** the current rails (73, 75, 77, 79) are adapted to be pressed into the annular grooves (97).

4. A circuit arrangement in accordance with Claim 3, **characterised in that** the support plate (65) comprises snap-in catches for latching the current rails (73, 75, 77, 79) in the annular grooves (97).

5. A circuit arrangement in accordance with Claim 3, **characterised in that** the current rails (73, 75, 77, 79) are arrestable in the annular grooves (97) of the support plate (65) by thermal caulkings.

6. A circuit arrangement in accordance with any of the preceding Claims, **characterised in that** the first and the third current rails (73, 77) are producible in a first punching die and the second and the fourth current rails (75, 79) are producible in a second punching die during one respective punching process, whereby the second, third and fourth current rails (75, 77, 79) are each simultaneously provided with a tab (101) for stranded terminal wires.

7. A circuit arrangement in accordance with any of the preceding Claims, **characterised in that** the hub (67) of the support plate (65) comprises a centring nose (105) on its inner peripheral surface (103), said nose being latchable in latching recesses (107) of the mounting tube (69) for precisely positioning the angle of the support plate (65) relative to the winding coils (15 - 37).

8. A circuit arrangement in accordance with any of the preceding Claims, **characterised in that** the end face (109) of the hub (67) facing the motor flange (71) comprises, which are adapted to be brought into engagement with an annular stop surface (113) on the mounting tube (69) for the purposes of compensating for tolerances in the axial direction.

## Revendications

1. Circuit pour connecter des enroulements statoriques d'un moteur d'entraînement sans balai, à commutation électronique, pour un dispositif d'entraînement de ventilateur de véhicule automobile, comportant un stator (7) possédant trois faisceaux d'enroulements (9,11,13) qui sont décalés de 180°, et comportant une plaque de support de commutation (63), disposé du côté d'une bride et tournée vers le stator (7) et constituée par une plaque de support (65) en forme de disque annulaire, et pouvant être montée de façon fixe par un noyau (67) sur un tube de support (69) sur la bride (71) du moteur et comportent des conducteurs de courant (73,75,77,79) qui sont fixés sur le côté (80) de la plaque de support (65), tourné à l'opposé des enroulements statoriques (15-37), et fixés concentriquement au moyeu (67) sur la plaque de support (65), et dont chacun est relié à des départs (89) des enroulements statoriques (15-37) des différents faisceaux de conducteurs (9,11,13), et dont chacun est relié aux extrémités (85) des enroulements statoriques (15-37) de tous les faisceaux d'enroulements (9,11,13), **caractérisé en ce que** le premier conducteur de courant (73), qui est le plus près du moyeu (67) de la plaque de support (65), comporte des pattes coudées (81), auxquelles peuvent être reliées les extrémités (85) des enroulements statoriques (15-37) de tous les faisceaux d'enroulements (9,11,13) à travers des ouvertures d'enfichage (113) qui sont formées dans la plaque de support (65) entre le moyeu de forme annulaire (67) de cette dernière et le premier conducteur de courant (73), que trois autres conducteurs de courant (75,77,79) sont fixés concentriquement autour du premier conducteur de courant (73), à la plaque de support (65) et que les pattes (86,87,88), qui sont disposées sur les second, troisième et quatrième conducteurs de courant (75, 77, 79) et qui servent à établir la liaison avec les débuts d'enroulements (89) sont disposés à la même distance du moyeu (67) sur la périphérie (91) de la plaque de support (65), les pattes (86) du second conducteur de courant (75) étant disposées, au moyen de guides (93) placés en renfoncement dans la plaque de support (65), de manière à pouvoir s'étendre au-dessous du troisième conducteur de courant (77) et du quatrième conducteur de courant (79), et les pattes (86) du troisième conducteur de courant (77) étant disposées au moyen de guides (95) disposés en renfoncement, de manière à pouvoir passer au-dessous du quatrième conducteur de courant (79).

2. Montage selon la revendication 1, **caractérisé en ce que** les conducteurs de courant (73,75,79) sont fixés dans un plan en étant insérés dans des rainures annulaires (97) formées dans la plaque de support (65), et que les guides (33,95), qui sont disposés en renfoncement, pour les pattes (86,87) des deuxième et troisième conducteurs de courant (75,77) sont formés dans un second plan dans la plaque de support (65).

3. Montage selon la revendication 2, **caractérisé en ce que** les conducteurs de courant (73,75,77,79) sont disposés de manière à pouvoir être enfoncés à l'intérieur des gorges annulaires (97).

4. Montage selon la revendication 3, **caractérisé en ce que** la plaque de support (65) comporte des ergots d'encliquetage pour l'encliquetage des conducteurs de courant (73,75,77,79) dans les gorges annulaires (97).

5. Montage selon la revendication 3, **caractérisé en ce que** les conducteurs de courant (73,75,77,79) peuvent être bloqués par matage à chaud dans les gorges annulaires (90) de la plaque de support (65).

6. Montage selon l'une des revendications précédentes, **caractérisé en ce que** les premier et troisième conducteurs de courant (73,77) peuvent être formés dans un premier outil de découpage et les second et quatrième conducteurs de courant (75,79) peuvent être formés dans un second outil de découpage, au cours d'un processus respectif de découpage, les deuxième, troisième et quatrième conducteurs de courant (75,77,79) étant pourvus simultanément d'une patte respective (101) pour des fentes de raccordement.

7. Montage selon l'une des revendications précédentes, **caractérisé en ce que** le moyeu (67) de la plaque de support (65) possède, sur sa surface périphérique intérieure, un ergot de centrage (105), qui, pour le positionnement angulaire précis de la plaque de support (65) par rapport aux bobines d'enroulements (15-37), peut être encliqueté dans des évidements d'encliquetage (107) du tube de support de palier (69).

8. Montage selon l'une des revendications précédentes, **caractérisé en ce que** la surface frontale (109), qui est tournée vers la bride (71) du moteur, du moyeu (67) de la plaque de support (65) comporte des ergots de compensation saillants (111), qui peuvent être amenés à s'appliquer, pour une compensation de tolérance dans la direction axiale, au moyen d'une surface de butée de forme annulaire (112), contre le tube de support de palier (69).
